# EUROPEAN PATENT SPECIFICATION

(11) **EP 4 762 396 B1**
(45) Date of publication and mention of the grant of the patent: **09.12.2026**
(21) Application number: 25716736.1
(22) Date of filing: 07.04.2025
(51) Int. Cl.: G02F 1/1343, G02F 1/1345, G02F 1/1334

(54) **SMART PDLC SHUTTER WITH ELECTRODES ON ONE SIDE**
INTELLIGENTER PDLC-VERSCHLUSS MIT EINSEITIG ANGEORDNETEN ELEKTRODEN
OBTURATEUR PDLC INTELLIGENT AVEC ÉLECTRODES SUR UN CÔTÉ

(30) Priority: 08.04.2024 EP 24382356
(43) Date of publication of application: 24.06.2026
(73) Proprietor: Dream Glass S. L., 28860 Paracuellos De Jarama (Madrid) (ES)
(72) Inventor: MESHKAT MAMALEK, Mojtaba, 28860 Paracuellos De Jarama Madrid (ES)
(74) Representative: TRBL Intellectual Property
(86) International application number: PCT/EP2025/059482
(87) International publication number: WO 2025/214961

(56) References cited:
- US-A1- 2021 379 968
- US-A1- 20230 352 208

## Description

### FIELD OF THE INVENTION

The present invention lies within the technical field of smart films. More specifically, the invention relates to a shutter and a method and apparatus for manufacturing thereof.

### BACKGROUND OF THE INVENTION

There is a big demand in some industrial sectors, such an automotive one, to provide panoramic sunroofs with smart glass, especially with a Polymer Dispersed Liquid Crystal (PDLC) layer.

In particular, the type of shutters that are involved in the present invention are those which comprise a first conductive layer (such as an Indium Tin Oxide material deposited on a thin sheet of Polyethylene Terephthalate, called ITO PET), a second conductive layer (e.g., a second ITO PET) and a cured PDLC material encapsulated between the two ITO PETs. The first ITO PET is divided into segments by etching, while the second ITO PET is a common electrode.

The fact that these shutters have two conductive layers usually means that they should be accessed from both sides to provide electric supply and control to these electrodes. This is sometimes undesired, since the installation of these elements requires a clean and slim connection.

Relevant background art useful for understanding the invention, according to Rule 42(1)(b) EPC include: US2021/379968 and US2023/352208.

The present invention provides a solution for these problems with a smart film shutter that provides connection to both electrodes from the same side.

### BRIEF DESCRIPTION OF THE INVENTION

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

A first object of the present invention relates to a smart film comprising a first conductive layer, a second conductive layer and a layer of a cured polymer dispersed liquid crystal material; wherein
the first conductive layer comprises a first portion and a second portion;
the second conductive layer comprises a first portion and a second portion;
the layer of a cured polymer dispersed liquid crystal material is arranged between the first portion of the first conductive layer and the first portion of the second conductive layer;
   wherein
the first conductive layer comprises etching lines, each etching line extending both in the first portion and the second portion of the first conductive layer, wherein the etching lines divide the first conductive layer in shutter portions, wherein each shutter portion has a first portion which is the portion located in the first portion of the first conductive layer and a second portion which is the portion located in the second portion of the first conductive layer;
the first portion of the first conductive layer comprises a width measured in a first direction and a length measured in a second direction perpendicular to the first direction;
the second portion of the first conductive layer comprises the same length as the first portion of the first conductive layer and a width which is less than the fifth part of the width of the first portion of the first conductive layer;
the smart film further comprises an electrode laid on the second portion of each shutter portion, either directly or by the interposition of a conductive element;
the first portion of the second conductive layer has the same width and the same length as the first portion of the first conductive layer;
the second portion of the second conductive layer has the same width as the first portion of the second conductive layer and has a first subportion and a second subportion;
the length of the second subportion is not constant, and varies between a maximum value and a minimum value, wherein the maximum value is lower than a tenth of the length of the first portion of the second conductive layer and the minimum value is higher than zero and lower than 75% of the maximum value;
the smart film further comprises a busbar installed on the second subportion, covering a zone where the length of the second subportion is lower than the length of the first subportion.

The invention presents a smart film with three main layers: a first conductive layer, a second conductive layer and a PDLC layer arranged between them. The first conductive layer has a first width and a first length, while the second conductive layer has a second width and a second length. The second length is greater than the first length and the second width is lower than the first width. The extra width of the first conductive layer is due to the second portion of the first conductive layer and the extra length of the second conductive layer is due to the second portion of the second conductive layer. The electrodes are installed in the second portion of the first conductive layer so, since the second conductive layer does not cover this second portion of the first conductive layer, these electrodes are not covered. The busbar is installed in the second portion of the second conductive layer so, since this second portion is not covered by the first conductive layer, and due to the irregularities in the second subportion of the second portion of the second conductive layer, this busbar is seen from the opposite side.

The fact that the second portion of the second conductive layer has a busbar installed on the second subportion in a zone where the length of the second subportion is shorter causes the busbar being seen from the opposite side, since it stands out from the end of the second subportion, not because it is installed farther than the length of the first subportion, but due to the fact that the second subportion is, in some zones, shorter. Hence, the busbar is seen from the same side as the electrodes of the shutter portions, so that all the electrodes and busbar can be fed from the same side, thus allowing the installation of the flexible printed circuit from one side, which feeds the electric contacts of both layers.

In some particular embodiments, the smart film further comprises a polymer element deposited on the busbar, covering a margin of at least 2 mm at both sides of the busbar, the sides referring to the second direction.

A polymer element serves as a dielectric to avoid undesired connections between the electric contact of the busbar and other electrodes or connections. The margin of 2 mm in the second direction allows an extra security margin that allows the polymer to avoid any danger.

In some particular embodiments, the smart film further comprises conductive paste element deposited on the second portion of each shutter portion interposed between each second portion and the corresponding electrode.

The paste element covers any irregular surface of the electrode, and ensures a good electric contact between the conductive layer and the electrode.

In some particular embodiments, the first subportion of the second portion of the second conductive layer has a greater surface than the second subportion of the second portion of the second conductive layer.

In some particular embodiments, the second subportion of the second portion of the second conductive layer comprises a plurality of indents, wherein each indent penetrates until de 50% of the length of the second subportion of the second portion of the second conductive layer.

There is a zone of the second portion of the second conductive layer which is not a straight rectangle. In this zone, there are some irregularities that are defined as indents, so that the length of the second portion in this zone is irregular. These indents are lacks of material which can have a regular shape (e.g. small rectangles which penetrate orthogonally in the second portion) or an irregular shape. In any case, these indents allow a straight piece been seen from the opposite side, since the indents leave lacks of material, so that any busbar which is deposited on this lack of material will be seen from the opposite side.

In some particular embodiments, the second subportion of the second portion of the second conductive layer comprises a plurality of sawteeth.

Sawteeth are easy to perform and is a good way of obtaining indents which creates this lack of material that will be used to access the busbar from the opposite side where it is installed.

In some particular embodiments, the conductive paste elements comprise silver paste.

Silver paste is a compound which combines good conductive properties with a good filling of irregularities.

In some particular embodiments, the etching lines are parallel to the first direction.

These cases allow the use of this device as a shutter to provide an animated transition between the privacy state and the transparent state.

### DESCRIPTION OF THE FIGURES

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first view of some elements of a particular embodiment of a smart film according to the invention.
Figure 2 shows the first conductive layer of the embodiment of Figure 1 covered with the PDLC layer in a particular embodiment of a smart film according to the invention.
Figure 3 shows the arrangement of Figure 2 when the second conductive layer is deposited on the PDLC layer in a particular embodiment of a smart film according to the invention.
Figure 4 shows many different examples of the indents of the second subportion of the second portion of the second conductive layer in different embodiments of a smart film according to the invention.
Figure 5 shows a busbar installed on the second subportion, covering the indents in a particular embodiment of a smart film according to the invention.
Figure 6 shows the smart film shown in Figure 5 from the opposite side.

In these figures, the following reference numbers have been used:
- 1: First conductive layer
- 2: Second conductive layer
- 3: PDLC layer
- 4: Etching lines
- 5: Shutter portion
- 6: Electrode
- 7: Busbar
- 8: Indent
- 9: Silver paste element
- 10: Smart film arrangement
- .11: First portion of the first conductive layer
- 12: Second portion of the first conductive layer
- 21: First portion of the second conductive layer
- 22: Second portion of the second conductive layer
- 23: First subportion of the second portion of the second conductive layer
- 24: Second subportion of the second portion of the second conductive layer

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. Elements of the example embodiments are consistently denoted by the same reference numerals throughout the drawings and detailed description where appropriate.

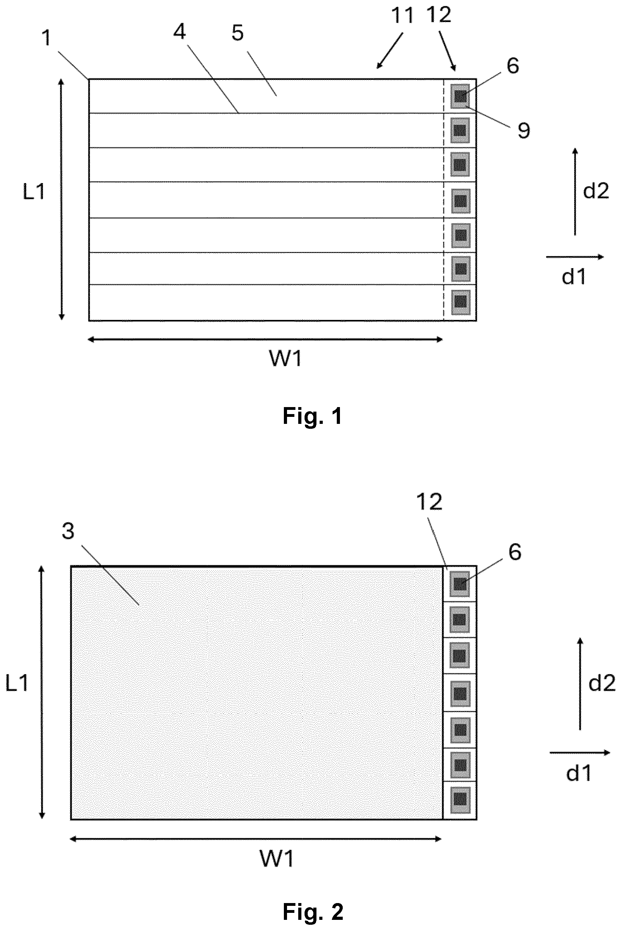

First to say, Figures 1 to 3 of the present description do not pretend to show the manufacturing method of the smart film 10 of the invention, but are just to illustrate the layer structure of the same.

Figure 1 shows a first view of some elements of a smart film 10 according to the invention.

The smart film 10 comprises a first conductive layer, a second conductive layer and a layer of a cured polymer dispersed liquid crystal material (PDLC). The PDLC layer is arranged between the first conductive layer and the second conductive layer. The first conductive layer has a front face and a back face, and the second conductive layer has a front face and a back face. The front face is the face which contacts the PDLC layer, and the back face is the face which is seen from the outside.

In this figure, the front face of the first conductive layer of the smart film 10 is seen. This is possible because the second conductive layer and the PDLC layer have been removed for the sake of convenience. Otherwise, it would be impossible to see the front face of the first conductive layer 1.

In this first face, the first conductive layer 1 comprises a first portion 11 and a second portion 12. In the complete smart film 10, the first portion 11 will be covered, firstly by the PDLC layer and then, by the second layer, so this front face of the first portion 11 will not be seen once the smart film 10 is assembled.

This first conductive layer 1 comprises etching lines 4 which, in this particular case, are parallel to a first direction d1, although in other embodiments can have any shape. Each etching line 4 extends both in the first portion 11 and second portion 12 of the first conductive layer 1, there is no discontinuity in the etching lines 4. The etching lines 4 divide the first conductive layer into shutter portions 5, wherein each shutter portion 5 has a first portion which is the zone of the shutter portion 5 located in the first portion 11 of the first conductive layer 2 and a second portion which is the zone of the shutter portion 5 located in the second portion 12 of the first conductive layer 1.

The first portion 11 of the first conductive layer 1 has a width W1 measured in the first direction d1 and a length L1 measured in a second direction d2 perpendicular to the first direction. These dimensions will be important, since they are carefully chosen so that the rest of the elements (the PDLC layer and the second layer) will have corresponding dimensions so that the advantages of the present invention can be obtained.

In particular, the second portion 12 of the first conductive layer 1 has the same length L1 as the first portion 11 of the first conductive layer 1 and a width which is the tenth part of the width W1 of the first portion 11 of the first conductive layer 1.

As may be seen in the figure, the smart film 10 further comprises an electrode 6 laid on the second portion of each shutter portion 5, by the interposition of a conductive element 9 made of silver paste.

Figure 2 shows the first conductive layer 1 covered with the PDLC layer 3. The PDLC layer 3 has the same width W1 and length L1 as the first portion of the first conductive layer (which is not seen, since it falls under the PDLC layer 3), so that the only portion of the first conductive layer 1 which is seen after placing the PDLC layer 3 will be the second portion 12, which contains the electrodes 6.

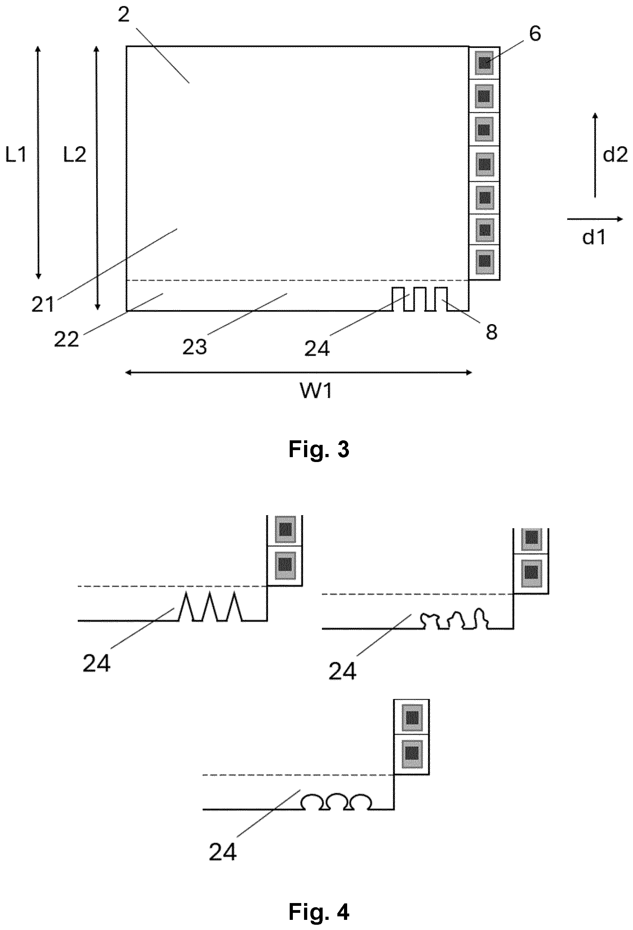

Figure 3 shows the smart film 10 when the second conductive layer 2 is deposited on the PDLC layer. The second conductive layer 2 comprises a first portion 21 and a second portion 22. However, while the first portion 21 of the second conductive layer 2 has the same width W1 and the same length L1 as the first portion of the first conductive layer, the second portion 22 of the second conductive layer 2 has the same width W1 as the first portion 21 of the second conductive layer 2.

This means that the first portion 21 of the second conductive layer 2 covers the PDLC layer 3, since it has the same surface as the first portion 11 of the first conductive layer 1 and the same surface as the PDLC layer 3. The second portion 22 of the second conductive layer 2 does not extend to cover the second portion 12 of the first conductive layer 1, but protrudes from the first portion 21 in the second direction d2. This means that the second portion 12 of the first conductive layer 1 (and the electrodes 6 installed therein) is seen even when the PDLC layer 3 and the second conductive layer 2 are installed in the smart film 10.

The second portion 22 of the second conductive layer 2 has a first subportion 23 and a second subportion 24. The first subportion 23 is a regular portion, while the length of the second subportion 24 is not constant, and varies between a maximum value and a minimum value, wherein the maximum value is lower than a tenth of the length of the first portion of the second conductive layer and the minimum value is higher than zero and lower than 75% of the maximum value.

This feature can be embodied in many different ways. In Figure 3, this is embodied by a plurality of indents 8 which creates some lack of material in the edge of the second subportion 24 of the second portion 22 of the second conductive layer 2. As can be seen, each indent 8 penetrates until de 50% of the length of the second subportion of the second portion of the second conductive layer.

Figure 4 shows many different examples of these indents, which may have a regular shape, such as rectangles, squares or sawteeth, or may have irregular shapes.

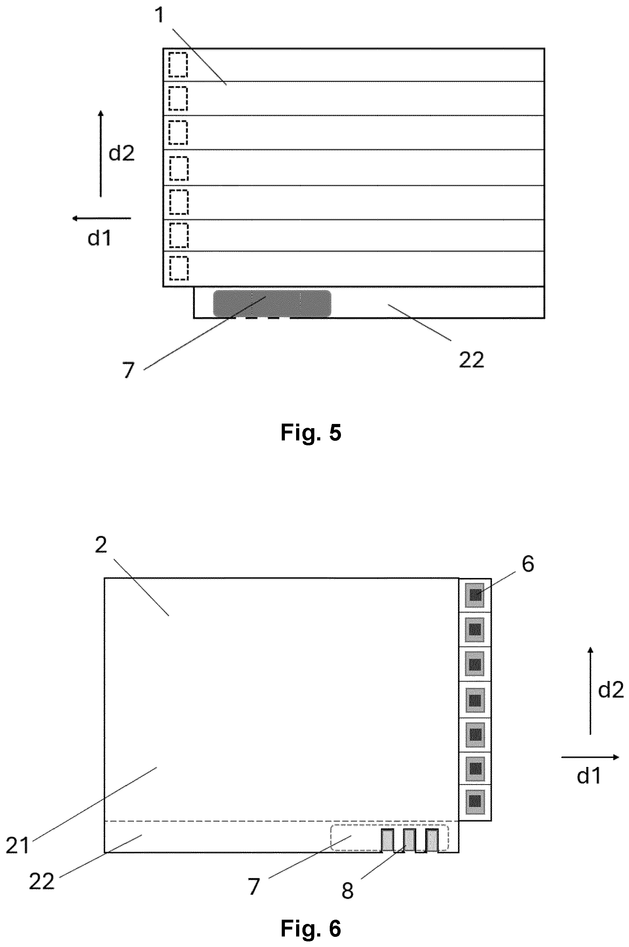

Figure 5 shows the smart film seen from the opposite side: in this case the back face of the first conductive layer 1 is seen. Since the second conductive layer has a length greater than the length of the first conductive layer 1, a second portion 22 of this second conductive layer 2 is seen. In this second portion 22, a busbar 7 is installed. In fact, this busbar 7 is installed on the second subportion 24 of this second portion 22 of the second conductive layer 2, covering the indents (i.e., the zone where the length of the second subportion is lower than the length of the first subportion). Due to this arrangement, some portions of this busbar 7 will be seen from the opposite side, since the first conductive layer 1 does not cover the second portion 22 of the second conductive layer 2.

Figure 6 shows the smart film seen from the side of the second conductive layer, once the busbar 7 has been installed from the opposite side. As mentioned above, some portions of this busbar 7 are seen, since the first conductive layer 1 does not cover the second portion 22 of the second conductive layer 2.

In some cases, the smart film further comprises a polymer element deposited on the busbar, covering a margin of at least 2 mm at both sides of the busbar, the sides referring to the second direction d2. This is a way to protect the busbar and also to avoid any unwanted electric connection.

As can be seen in these figures, the second subportion of the second portion of the second conductive layer represents a lower surface than the first subportion of the same. However, in other embodiments, the second subportion can take the most of the surface of the second portion of the second conductive element.

## Claims

1. Smart film (10) comprising a first conductive layer (1), a second conductive layer (2) and a layer of a cured polymer dispersed liquid crystal material (3); wherein
the first conductive layer (1) comprises a first portion (11) and a second portion (12);
the second conductive layer (2) comprises a first portion (21) and a second portion (22);
the layer of a cured polymer dispersed liquid crystal material (3) is arranged between the first portion (11) of the first conductive layer and the first portion (21) of the second conductive layer;
wherein
the first conductive layer (1) comprises etching lines (4), each etching line (4) extending both in the first portion (11) and the second portion (12) of the first conductive layer (1), wherein the etching lines (4) divide the first conductive layer in shutter portions (5), wherein each shutter portion (5) has a first portion which is the portion located in the first portion (11) of the first conductive layer (2) and a second portion which is the portion located in the second portion (12) of the first conductive layer (1);
the first portion (11) of the first conductive layer comprises a width (W) measured in a first direction (d1) and a length (L) measured in a second direction (d2) perpendicular to the first direction;
the second portion (12) of the first conductive layer (1) comprises the same length as the first portion (11) of the first conductive layer (1) and a width which is less than the fifth part of the width of the first portion (11) of the first conductive layer (1);
the smart film (10) further comprises an electrode (6) laid on the second portion of each shutter portion (5), either directly or by the interposition of a conductive element;
the first portion (21) of the second conductive layer (2) has the same width and the same length as the first portion (11) of the first conductive layer (1);
the second portion (22) of the second conductive layer (2) has the same width as the first portion (21) of the second conductive layer (2) and has a first subportion (23) and a second subportion (24),
**characterized in that**,
the length of the second subportion (24) is not constant, and varies between a maximum value and a minimum value, wherein the maximum value is lower than a tenth of the length of the first portion of the second conductive layer and the minimum value is higher than zero and lower than 75% of the maximum value;
the smart film further comprises a busbar (7) installed on the second subportion, covering a zone where the length of the second subportion is lower than the length of the first subportion.

2. Smart film (10) according to claim 1, further comprising a polymer element deposited on the busbar, covering a margin of at least 2 mm at both sides of the busbar, the sides referring to the second direction (d2).

3. Smart film (10) according to any of the preceding claims, wherein the smart film (10) further comprises conductive paste element (9) deposited on the second portion of each shutter portion (5) interposed between each second portion and the corresponding electrode (6).

4. Smart film (10) according to any of the preceding claims, wherein the first subportion (23) of the second portion (22) of the second conductive layer (2) has a greater surface than the second subportion (24) of the second portion (22) of the second conductive layer (2).

5. Smart film (10) according to any of the preceding claims, wherein the second subportion (24) of the second portion of the second conductive layer comprises a plurality of indents (8), wherein each indent penetrates until de 50% of the length of the second subportion of the second portion of the second conductive layer.

6. Smart film (10) according to any of the preceding claims, wherein the second subportion of the second portion of the second conductive layer comprises a plurality of sawteeth.

7. Smart film (10) according to any of the preceding claims, wherein the conductive paste elements comprise silver paste.

8. Smart film (10) according to any of the preceding claims, wherein the etching lines (4) are parallel to the first direction (d1).

## Patentansprüche

1. Smartfilm (10), umfassend eine erste leitfähige Schicht (1), eine zweite leitfähige Schicht (2) und eine Schicht aus einem ausgehärteten, polymerdispergierten Flüssigkristallmaterial (3); wobei
die erste leitfähige Schicht (1) einen ersten Abschnitt (11) und einen zweiten Abschnitt (12) umfasst;
die zweite leitfähige Schicht (2) einen ersten Abschnitt (21) und einen zweiten Abschnitt (22) umfasst;
die Schicht aus einem ausgehärteten, polymerdispergierten Flüssigkristallmaterial (3) zwischen dem ersten Abschnitt (11) der ersten leitfähigen Schicht und dem ersten Abschnitt (21) der zweiten leitfähigen Schicht angeordnet ist;
wobei
die erste leitfähige Schicht (1) Ätzlinien (4) umfasst, wobei sich jede Ätzlinie (4) sowohl im ersten Abschnitt (11) als auch im zweiten Abschnitt (12) der ersten leitfähigen Schicht (1) erstreckt, wobei die Ätzlinien (4) die erste leitfähige Schicht in Verschlussabschnitte (5) unterteilen, wobei jeder Verschlussabschnitt (5) einen ersten Abschnitt, der der im ersten Abschnitt (11) der ersten leitfähigen Schicht (2) befindliche Abschnitt ist, und einen zweiten Abschnitt, der der im zweiten Abschnitt (12) der ersten leitfähigen Schicht (1) befindliche Abschnitt ist, aufweist;
der erste Abschnitt (11) der ersten leitfähigen Schicht eine in einer ersten Richtung (d1) gemessene Breite (W) und eine in einer zweiten Richtung (d2) senkrecht zur ersten Richtung gemessene Länge (L) umfasst;
der zweite Abschnitt (12) der ersten leitfähigen Schicht (1) dieselbe Länge wie der erste Abschnitt (11) der ersten leitfähigen Schicht (1) und eine Breite umfasst,
die kleiner ist als der fünfte Teil der Breite des ersten Abschnitts (11) der ersten leitfähigen Schicht (1);
der Smartfilm (10) ferner eine Elektrode (6) umfasst, die auf dem zweiten Abschnitt jedes Verschlussabschnitts (5) angeordnet ist, entweder direkt oder unter Zwischenschaltung eines leitfähigen Elements;
der erste Abschnitt (21) der zweiten leitfähigen Schicht (2) dieselbe Breite und dieselbe Länge wie der erste Abschnitt (11) der ersten leitfähigen Schicht (1) aufweist;
der zweite Abschnitt (22) der zweiten leitfähigen Schicht (2) dieselbe Breite wie der erste Abschnitt (21) der zweiten leitfähigen Schicht (2) aufweist und einen ersten Unterabschnitt (23) und einen zweiten Unterabschnitt (24) aufweist,
**dadurch gekennzeichnet, dass**
die Länge des zweiten Unterabschnitts (24) nicht konstant ist und zwischen einem Maximalwert und einem Mindestwert variiert, wobei der Maximalwert kleiner als ein Zehntel der Länge des ersten Abschnitts der zweiten leitfähigen Schicht ist und der Mindestwert größer als Null und kleiner als 75 % des Maximalwerts ist;
der Smartfilm ferner eine Sammelschiene (7) umfasst, die auf dem zweiten Unterabschnitt installiert ist, wobei eine Zone abgedeckt wird, in der die Länge des zweiten Unterabschnitts geringer ist als die Länge des ersten Unterabschnitts.

2. Smartfilm (10) nach Anspruch 1, ferner umfassend ein auf der Sammelschiene aufgebrachtes Polymerelement, wobei an beiden Seiten der Sammelschiene ein Rand von mindestens 2 mm abgedeckt ist, wobei sich die Seiten auf die zweite Richtung (d2) beziehen.

3. Smartfilm (10) nach einem der vorhergehenden Ansprüche, wobei der Smartfilm (10) ferner ein leitfähiges Pastenelement (9) umfasst, das auf dem zweiten Abschnitt jedes Verschlussabschnitts (5) aufgebracht ist und zwischen jedem zweiten Abschnitt und der entsprechenden Elektrode (6) eingelegt ist.

4. Smartfilm (10) nach einem der vorhergehenden Ansprüche, wobei der erste Unterabschnitt (23) des zweiten Abschnitts (22) der zweiten leitfähigen Schicht (2) eine größere Oberfläche aufweist als der zweite Unterabschnitt (24) des zweiten Abschnitts (22) der zweiten leitfähigen Schicht (2).

5. Smartfilm (10) nach einem der vorhergehenden Ansprüche, wobei der zweite Unterabschnitt (24) des zweiten Abschnitts der zweiten leitfähigen Schicht eine Vielzahl von Vertiefungen (8) umfasst, wobei jede Vertiefung bis zu 50 % der Länge des zweiten Unterabschnitts des zweiten Abschnitts der zweiten leitfähigen Schicht durchdringt.

6. Smartfilm (10) nach einem der vorhergehenden Ansprüche, wobei der zweite Unterabschnitt des zweiten Abschnitts der zweiten leitfähigen Schicht eine Vielzahl von Sägezähnen umfasst.

7. Smartfilm (10) nach einem der vorhergehenden Ansprüche, wobei die leitfähigen Pastenelemente Silberpaste umfassen.

8. Smartfilm (10) nach einem der vorhergehenden Ansprüche, wobei die Ätzlinien (4) parallel zur ersten Richtung (d1) verlaufen.

## Revendications

1. Film intelligent (10) comprenant une première couche conductrice (1), une deuxième couche conductrice (2) et une couche d'un matériau durci à cristaux liquides dispersés dans un polymère (3) ; dans lequel
la première couche conductrice (1) comprend une première partie (11) et une deuxième partie (12) ;
la deuxième couche conductrice (2) comprend une première partie (21) et une deuxième partie (22) ;
la couche d'un matériau durci à cristaux liquides dispersés dans un polymère (3) est disposée entre la première partie (11) de la première couche conductrice et la première partie (21) de la deuxième couche conductrice ;
dans lequel
la première couche conductrice (1) comprend des lignes de gravure (4), chaque ligne de gravure (4) s'étendant à la fois dans la première partie (11) et dans la deuxième partie (12) de la première couche conductrice (1), dans lequel les lignes de gravure (4) divisent la première couche conductrice en portions d'obturation (5), dans lequel chaque portion d'obturation (5) présente une première partie qui est la partie située dans la première partie (11) de la première couche conductrice (2) et une deuxième partie qui est la partie située dans la deuxième partie (12) de la première couche conductrice (1) ;
la première partie (11) de la première couche conductrice comprend une largeur (W) mesurée dans une première direction (d1) et une longueur (L) mesurée dans une deuxième direction (d2) perpendiculaire à la première direction ;
la deuxième partie (12) de la première couche conductrice (1) comprend la même longueur que la première partie (11) de la première couche conductrice (1) et une largeur inférieure au cinquième de la largeur de la première partie (11) de la première couche conductrice (1) ;
le film intelligent (10) comprend en outre une électrode (6) disposée sur la deuxième partie de chaque portion d'obturation (5), soit directement, soit par interposition d'un élément conducteur ;
la première partie (21) de la deuxième couche conductrice (2) présente la même largeur et la même longueur que la première partie (11) de la première couche conductrice (1) ;
la deuxième partie (22) de la deuxième couche conductrice (2) présente la même largeur que la première partie (21) de la deuxième couche conductrice (2) et présente une première sous-partie (23) et une deuxième sous-partie (24),
**caractérisé en ce que**,
la longueur de la deuxième sous-partie (24) n'est pas constante et varie entre une valeur maximale et une valeur minimale, dans lequel la valeur maximale est inférieure au dixième de la longueur de la première partie de la deuxième couche conductrice et la valeur minimale est supérieure à zéro et inférieure à 75 % de la valeur maximale ;
le film intelligent comprend en outre une barre omnibus (7) installée sur la deuxième sous-partie, recouvrant une zone dans laquelle la longueur de la deuxième sous-partie est inférieure à la longueur de la première sous-partie.

2. Film intelligent (10) selon la revendication 1, comprenant en outre un élément polymère déposé sur la barre omnibus, recouvrant une marge d'au moins 2 mm de chaque côté de la barre omnibus, les côtés étant définis par rapport à la deuxième direction (d2).

3. Film intelligent (10) selon l'une quelconque des revendications précédentes, dans lequel le film intelligent (10) comprend en outre un élément en pâte conductrice (9) déposé sur la deuxième partie de chaque portion d'obturation (5), interposé entre chaque deuxième partie et l'électrode (6) correspondante.

4. Film intelligent (10) selon l'une quelconque des revendications précédentes, dans lequel la première sous-partie (23) de la deuxième partie (22) de la deuxième couche conductrice (2) présente une surface supérieure à celle de la deuxième sous-partie (24) de la deuxième partie (22) de la deuxième couche conductrice (2).

5. Film intelligent (10) selon l'une quelconque des revendications précédentes, dans lequel la deuxième sous-partie (24) de la deuxième partie de la deuxième couche conductrice comprend une pluralité d'encoches (8), dans lequel chaque encoche pénètre jusqu'à 50 % de la longueur de la deuxième sous-partie de la deuxième partie de la deuxième couche conductrice.

6. Film intelligent (10) selon l'une quelconque des revendications précédentes, dans lequel la deuxième sous-partie de la deuxième partie de la deuxième couche conductrice comprend une pluralité de dents de scie.

7. Film intelligent (10) selon l'une quelconque des revendications précédentes, dans lequel les éléments en pâte conductrice comprennent une pâte d'argent.

8. Film intelligent (10) selon l'une quelconque des revendications précédentes, dans lequel les lignes de gravure (4) sont parallèles à la première direction (d1).
